# FASCICULE DE BREVET EUROPEEN

(11) **EP 0 520 853 B1**
(45) Date de publication et mention de la délivrance du brevet: **23.01.2002**
(21) Numéro de dépôt: 92401632.2
(22) Date de dépôt: 12.06.1992
(51) Int. Cl.: G01P 3/44

(54) **Montage d'étanchéité pour capteur d'informations adapté à un roulement étanche**
Dichtungsanordnung für einen an ein abgedichtetes Walzlager angepassten Messwertaufnehmer
Sealing assembly for sensor suitable for sealed rollbearing

(30) Priorité: 28.06.1991 FR 9108086
(43) Date de publication de la demande: 30.12.1992
(73) Titulaire: S.N.R. ROULEMENTS, 74010 Annecy Cédex (FR)
(72) Inventeur: Coux, Isabelle, F-74600 Seynod (FR)
(74) Mandataire: Ernst-Schonberg, Michel

(56) Documents cités:
- DE-A- 3 809 904
- GB-A- 2 207 470

## Description

L'invention concerne un montage d'étanchéité pour capteur d'informations adapté à un roulement étanche qui transforme un paramètre de fonctionnement du roulement en un signal.

La publication FR-A-2629155 décrit un dispositif d'étanchéité pour capteurs d'informations situé entre le roulement et une partie extérieure dans lequel une lèvre d'étanchéité portée par l'élément capteur est en contact de frottement sur une armature tournante de l'élément codeur.

La publication FR-A-2618516 décrit un dispositif d'étanchéité pour capteurs d'informations dans lequel une lèvre d'étanchéité portée par une première armature support du capteur est en appui sur une deuxième armature support de l'élément codeur dont on désire mesurer la vitesse.

Les réalisations précitées augmentent notablement les caractéristiques dimensionnelles du roulement.

La demande de brevet 90-13430 déposée au nom de la demanderesse décrit un roulement dans lequel le montage d'étanchéité du capteur respecte l'encombrement ISO du roulement.

Lorsque l'on doit incorporer dans le joint d'étanchéité du roulement un composant électronique ou électrique, les renforts et armatures locales de protection du composant modifient sensiblement les caractéristiques physiques du joint. Pour certaines applications le niveau d'étanchéité du roulement peut alors s'avérer insuffisant.

Par ailleurs, lors des variations importantes de température de fonctionnement, les montages de capteurs qui utilisent un empilage de composants de matériaux différents ne supportent pas les contraintes consécutives à leur dilatation.

Dans certains montages il est souhaité une liberté en rotation du capteur, notamment lors du montage du roulement dans son ensemble, par contre d'autres montages exigent une immobilisation efficace du capteur.

L'invention a pour objet de remédier aux inconvénients précités en proposant un montage d'étanchéité mécaniquement stable.

Selon l'invention la première armature support du capteur, possède un pli de rigidification orienté axialement en direction des corps roulants pour envelopper un élément élastomère porteur de la lèvre d'étanchéité et ledit pli possède une fenêtre dans laquelle les bords latéraux délimitent la zone d'encastrement du capteur et le bord extérieur, la zone d'appui radial dudit capteur.

Le montage ainsi réalisé permet sans peine la conservation de la qualité d'étanchéité requise pour le roulement à caractéristiques dimensionnelles normalisées qui satisfont à titre d'exemple les encombrements ISO.

D'autres caractéristiques et avantages du montage apparaîtront à la lecture de la description d'un exemple de réalisation du roulement en référence au dessin dans lequel :
- La figure 1 est une vue en coupe axiale du roulement à billes utilisant le montage d'étanchéité conforme à l'invention.
- La figure 2 est une vue en coupe radiale d'une armature support du capteur.
- La figure 3 est une vue de face de l'armature support du capteur, représentée à la figure 2.
- La figure 4 est une section radiale agrandie de l'armature représentée à la figure 2 dans la zone de montage du capteur.
- La figure 5 est une section radiale agrandie de l'armature représentée à la figure 2 illustrant la partie fonctionnelle d'ancrage sur la bague fixe du roulement.
- La figure 6 est une vue partielle arrière de l'armature support du capteur selon la flèche F6 de la figure 2.
- Les figures 7a, 7b, 7c représentent des sections partielles du montage d'étanchéité en rapport avec des variantes de réalisation de la deuxième armature support de l'élément codeur.

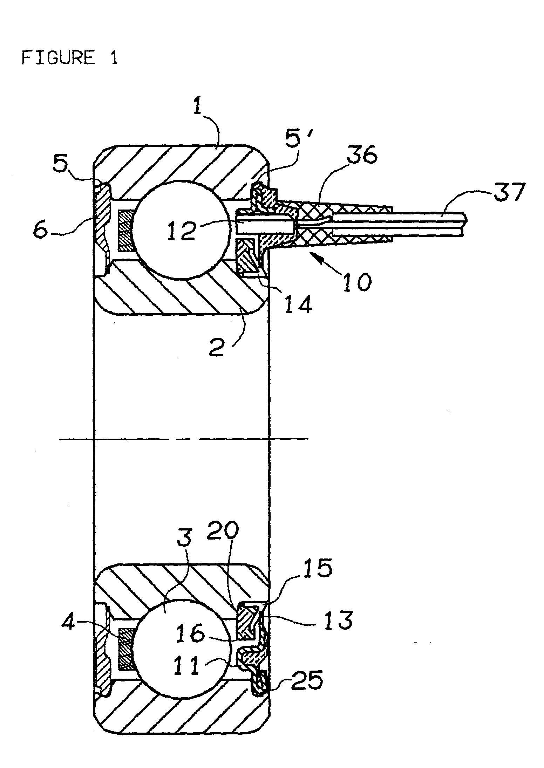

Selon le dessin, le roulement étanche représenté à la figure 1, possède une bague extérieure 1 et une bague intérieure 2 susceptibles d'être, au choix, fixes ou tournantes en fonction du montage utilisé.

Les bagues 1 et 2 possèdent des chemins de roulement pour des corps roulants 3 disposés dans une cage 4 qui en assure la retenue et le positionnement angulaire.

La bague extérieure 1 supposée fixe dans le mode d'application représenté, porte une gorge 5 de montage d'un joint d'étanchéité 6 conventionnel à lèvre souple placé d'un côté du roulement entre les bagues 1 et 2.

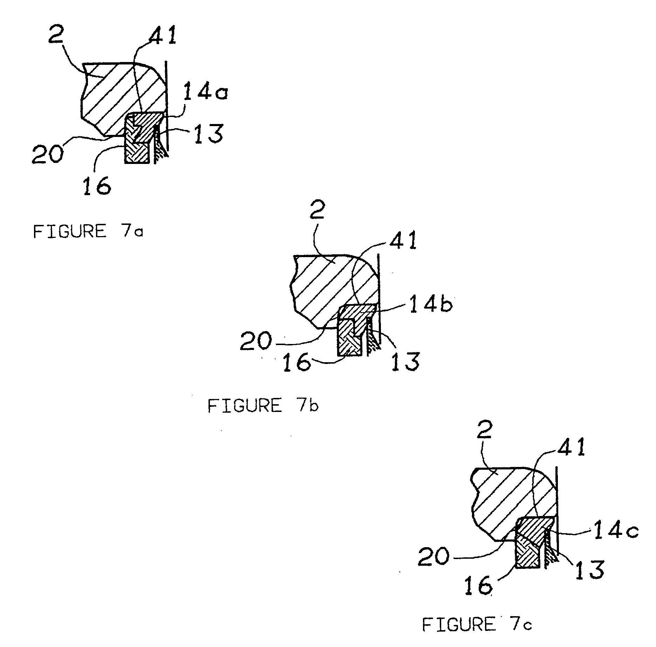

Le montage d'étanchéité 10 possède une première armature annulaire 11 montée dans une gorge 5' de la bague fixe 1 et porte un capteur 12 (magnétique, inductif ou capacitif) et une lèvre d'étanchéité radiale 13. La lèvre 13 est en appui étanche axi-radial sur une portée 15 (supposée conique dans le mode d'application représenté) d'une deuxième armature 14 fixée en rotation avec un élément codeur 16 dont on désire mesurer la vitesse. L'élément codeur 16 peut être porté soit par l'armature 14 représentée à la figure 1, soit par un élément d'épaisseur et de géométrie variables représenté respectivement sous la référence 14a, 14b, 14c aux figures 7a, 7b, 7c .

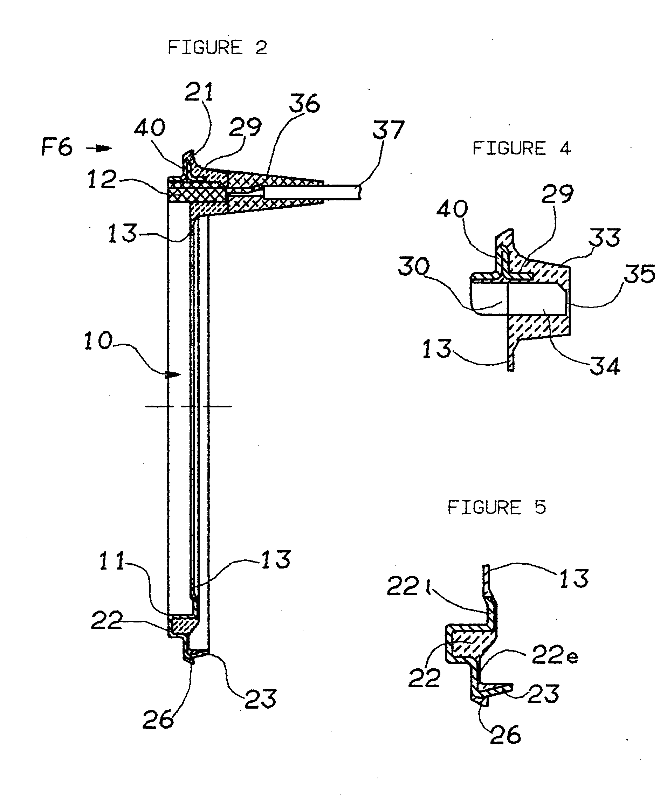

Dans ces exemples de réalisation non limitatifs l'élément tel que 14a, 14b ou 14c réalise un appui étanche avec un épaulement 20 de la bague intérieure 2 tournante. En se référant plus particulièrement aux figures 2 et 4, on voit que l'armature 11 porte un pli annulaire 22 de rigidification orienté axialement en direction des corps roulants 3, un matériau élastomère 21 étant surmoulé sur la face avant de ladite armature 11 de manière à remplir la cavité formée par ledit pli 22. Une première extension radiale 22 i du premier pli 22 porte la lèvre d'étanchéité 13 orientée vers le centre de l'armature. Une deuxième extension radiale 22e du premier pli 22 possède un prolongement axial 23.

L'extension radiale 22e et le prolongement axial 23 de l'armature 11 constituent après repliement vers l'axe du roulement une bordure annulaire 25 destinée à être sertie dans la gorge 5' de la bague fixe 1 ainsi que cela est représenté à la figure 1.

A cet effet la bordure annulaire 25 porte un talon de retenue 26 encastré dans la gorge 5'. Par ailleurs, le talon 26 réalise l'étanchéité entre la gorge 5' de la bague fixe 1 et la bordure annulaire 25 du montage 10.

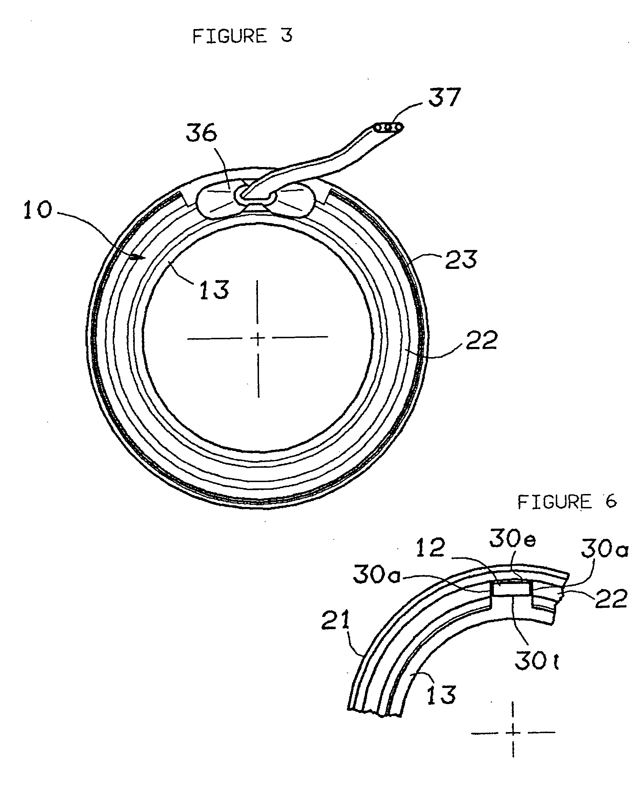

Dans le but de favoriser le montage du capteur 12 en conservant la rigidité du joint, une fenêtre 30 est pratiquée dans l'armature 11 par découpe du pli 22. Comme on peut le voir sur la figure 6 représentant la face arrière de l'armature 11, la fenêtre 30 débouche radialement vers l'intérieur et n'est donc limitée sur ladite face arrière, que par ses bords latéraux 30a et son bord radial extérieur 30e appartenant tous trois au pli 22. L'armature 11 possède sur sa face avant, dans la zone d'encastrement du capteur 12, une queue de montage 33 du capteur 12 représentée à la figure 4 et réalisée dans la masse du matériau élastomère constitutif de la lèvre 13.

La queue 33 possède un orifice 34 de réception du capteur 12 qui vient prolonger la fenêtre 30. C'est la paroi radiale intérieure de cet orifice 34 qui constitue le bord radial intérieur 30i représenté sur la figure 6. Ledit orifice 34 de réception du capteur 12 est muni d'une membrane 35 susceptible d'être perforée par exemple par les cosses ou fils de raccordement électrique du capteur.

Selon une autre caractéristique du montage, le prolongement axial 23 est replié, à l'extérieur de la fenêtre 30, contre la deuxième extension radiale 22e du pli 22, de manière à constituer le pli radial 40 représenté sur les figures 2 et 4.

Le prolongement axial 23 ainsi replié, se prolonge à son tour par une découpe axiale 29, noyée dans la masse du matériau élastomère 21, comme il est représenté sur la figure 4.

Cette découpe axiale 29 prolonge, sur la face avant, le bord radial extérieur 30e de la fenêtre 30.

Le montage ainsi réalisé est complété par la soudure du câble d'alimentation 37 sur les cosses. Un manchon protecteur 36 confère à la liaison électrique un complément d'étanchéité. Le manchon 36 peut être réalisé à titre d'exemple par moulage simultanément avec les autres parties du joint tels que la lèvre 13 et la queue 33 de montage du capteur, après avoir positionné le capteur 12 et le câble 37 dans le moule. Le manchon 36 peut aussi être réalisé par surmoulage sur la queue 33 de montage du capteur à la suite du positionnement préalable dans la fenêtre de montage 30 du capteur 12 soudé au câble 37.

Au moment de l'assemblage du montage d'étanchéité 10 avec le roulement, le prolongement axial 23 est rabattu contre la face antérieure de l'extension 22e tout en s'arc-boutant dans la gorge 5'.

Par ailleurs la découpe axiale 29 permet l'appui radial du capteur 12 et canalise les lignes du champ magnétique produit par le codeur 16 vers l'élément sensible du capteur 12.

La disposition de la lèvre d'étanchéité du'joint 6 et de la lèvre 13 est telle que ces lèvres occupent des positions latérales symétriques par rapport au plan médian du roulement.

Cette disposition permet une répartition équilibrée des couples de frottement antagonistes des lèvres d'étanchéité.

Lorsque le codeur 16 est monté sur un élément d'épaisseur et de géométrie variables 14a, 14b ou 14c tel que représenté sur les figures 7a, 7b, 7c, celui-ci peut être monté à force sur la portée 41 de la bague 2 et encastré entre la piste de roulement et la face latérale de la bague pour absorber les jeux consécutifs à la dilatation différentielle de la bague 2 et du codeur 16.

## Revendications

1. Montage d'étanchéité pour capteur d'informations adapté à un roulement étanche, ledit montage comportant une bague fixe (1), une bague tournante (2) et des corps roulants (3), une première armature annulaire (11) étant montée sur la bague fixe (1) et portant un capteur (12) et une lèvre d'étanchéité (13) en appui sur une deuxième armature annulaire (14) qui est montée sur la bague tournante (2) et porte un codeur (16), **caractérisé par le fait que** la première armature (11) possède un pli (22) annulaire de rigidification orienté axialement en direction des corps roulants (3), qu'un matériau élastomère (21) porteur de la lèvre d'étanchéité (13) est surmoulé sur la face avant de la première armature (11) et remplit la cavité du pli (22), que ledit pli possède une fenêtre (30) dont les bords latéraux (30a) délimitent la zone d'encastrement du capteur (12) et le bord extérieur (30e) une zone d'appui radial dudit capteur, et qu'un bord intérieur (30i) d'appui radial du capteur est défini par la paroi radiale intérieure de l'orifice (34) d'une queue (33) de montage du capteur (12) qui est réalisée dans la masse du matériau élastomère (21) et est située en face de la fenêtre (30).

2. Montage selon la revendication 1, **caractérisé par le fait que** la première armature (11) possède une bordure annulaire (25) de fixation repliée radialement vers l'axe du roulement et destinée à être sertie dans une gorge (5') de la bague fixe (1).

3. Montage selon la revendication 2, **caractérisé par le fait que** la bordure annulaire (25) porte un talon d'étanchéité (26) encastré dans la gorge (5').

4. Montage selon la revendication 1 ou 2, **caractérisé par le fait que** l'alimentation du capteur (12) est rigidifiée par la queue de montage (33).

5. Montage selon l'une quelconque des revendications 1 à 4, **caractérisé par le fait que** la queue de montage (33) porte un manchon (36) de protection et d'étanchéité.

6. Montage selon la revendication 5, **caractérisé par le fait que** le manchon (36) est réalisé par surmoulage sur la queue (33) de montage du capteur.

7. Montage selon la revendication 1, **caractérisé par le fait que** la lèvre d'étanchéité (13) de la première armature (11) est en appui axial et radial sur une portée (15) de la deuxième armature (14) qui est fixée en rotation avec le codeur (16) sur une portée (41) de la bague tournante (2).

8. Montage selon la revendication 7, **caractérisé par le fait que** la portée (15) de la deuxième armature (14) est une portée d'étanchéité.

9. Montage selon l'une quelconque des revendications 1 à 8, **caractérisé par le fait que** le codeur (16) est porté par un élément (14a, 14b, 14c) de la deuxième armature (14) en appui étanche avec un épaulement (20) de la bague tournante (2) qui limite axialement la portée de montage du codeur.

10. Montage selon l'une quelconque des revendications 1 à 9, **caractérisé par le fait que** la première armature (11) possède une découpe axiale (29) noyée dans la masse du matériau élastomère (21).

## Patentansprüche

1. Dichtungsanordnung für Informationssensoren, die an ein dichtes Lager angepasst ist, wobei die Anordnung einen stationären Ring (1), einen drehbaren Ring (2) und Lagerkörper (3) umfasst, wobei eine erste ringförmige Bewehrung (11) auf dem stationären Ring (1) montiert ist und einen Sensor (12) und eine Dichtungslippe (13) trägt, die sich auf einer zweiten ringförmigen Bewehrung (14) abstützt, welche auf dem drehbaren Ring (2) angebracht ist und eine Kodiereinrichtung (16) trägt, **dadurch gekennzeichnet, dass** die erste Bewehrung (11) einen ringförmigen Versteifungsfalz (22) aufweist, der axial in Richtung der Lagerkörper (3) verläuft, dass ein die Dichtungslippe (13) tragender Elastomerwerkstoff (21) von einem Abguss an der Vorderseite der ersten Bewehrung (11) angeformt ist und den Hohlraum des Falzes (22) ausfüllt, dass dieser Falz ein Fenster (30) aufweist, dessen seitliche Ränder (30a) den Einbaubereich des Sensors (12) und dessen Außenrand (30e) einen radialen Auflagebereich des Sensors begrenzen, und dass ein radialer innerer Auflagerand (30i) des Sensors durch die in der Masse des Elastomerwerkstoffs (21) ausgeführte und gegenüber dem Fenster (30) befindliche radiale Innenwandung der Öffnung (34) eines Montageschwanzes (33) des Sensors (12) definiert wird.

2. Anordnung nach Anspruch 1, **dadurch gekennzeichnet, dass** die erste Bewehrung (11) eine ringförmige Befestigungsumrandung (25) aufweist, die radial auf die Lagerachse zu umgebogen ist und in eine Rille (5') des stationären Rings (1) eingefasst werden soll.

3. Anordnung nach Anspruch 2, **dadurch gekennzeichnet, dass** die ringförmige Umrandung (25) einen in die Rille (5') eingelassenen Dichtungsbund (26) aufweist.

4. Anordnung nach Anspruch 1 oder 2, **dadurch gekennzeichnet, dass** die Versorgung des Sensors (12) durch den Montageschwanz (33) versteif wird.

5. Anordnung nach einem der vorstehenden Ansprüche 1 bis 4, **dadurch gekennzeichnet, dass** der Montageschwanz (33) eine Schutz- und Abdichthülle (36) aufweist.

6. Anordnung nach Anspruch 5, **dadurch gekennzeichnet, dass** die Hülle (36) von einem Abguss auf dem Montageschwanz (33) des Sensors geformt ist.

7. Anordnung nach Anspruch 1, **dadurch gekennzeichnet, dass** die Dichtungslippe (13) der ersten Bewehrung (11) axial und radial auf einer Auflagefläche (15) der zweiten Bewehrung (14) lagert, welche drehfest mit der Kodiereinrichtung (16) auf einer Auflagefläche (41) des drehbaren Rings (2) verbunden ist.

8. Anordnung nach Anspruch 7, **dadurch gekennzeichnet, dass** die Auflagefläche (15) der zweiten Bewehrung (14) eine Dichtfläche ist.

9. Anordnung nach einem der vorstehenden Ansprüche 1 bis 8, **dadurch gekennzeichnet, dass** die Kodiereinrichtung (16) auf einem Element (14a, 14b, 14c) der zweiten Bewehrung (14) gelagert ist, das sich abdichtend auf einen den Montagebereich der Kodiereinrichtung axial begrenzenden Ansatz (20) des drehbaren Rings (2) abstützt.

10. Anordnung nach einem der vorstehenden Ansprüche 1 bis 9, **dadurch gekennzeichnet, dass** die erste Bewehrung (11) eine axiale Ausnehmung (29) aufweist, die in der Masse des Elastomerwerkstoffs (21) versenkt ist.

## Claims

1. Sealing arrangement for data sensor suitable for a sealed bearing, said arrangement comprising a fixed ring (1), a rotating ring (2) and rolling bodies (3), a first annular armature (11) being mounted on the fixed ring (1) and carrying a sensor (12) and a sealing lip (13) bearing upon a second annular armature (14) that is mounted on the rotating ring (2) and carries a coder (16), **characterised by** the fact that the first armature (11) has an annular stiffening fold (22) orientated axially in the direction of the rolling bodies (3), that an elastomer material (21) carrying the sealing lip (13) is moulded onto the front face of the first armature (11) and fills the cavity of the fold (22), that said fold has a window (30) the lateral edges (30a) of which delimit the area of enclosure of the sensor (12) and the exterior edge (30e) delimits a radial bearing area of said sensor, and that an interior edge (30i) of radial bearing of the sensor is defined by the interior radial wall of the aperture (34) of a lead (33) for mounting the sensor (12) that is formed in the mass of elastomer material (21) and is located opposite the window (30).

2. Arrangement according to claim 1, **characterised by** the fact that the first armature (11) has an annular fixing edge (25) folded back radially towards the axis of the bearing and intended to be inserted in a groove (5') of the fixed ring (1).

3. Arrangement according to claim 2, **characterised by** the fact that the annular edge (25) carries a sealing heel (26) embedded in the groove (5').

4. Arrangement according to claim 1 or 2, **characterised by** the fact that the supply for the sensor (12) is stiffened by the mounting lead (33).

5. Arrangement according to any one of claims 1 to 4, **characterised by** the fact that the mounting lead (33) carries a protective and sealing sleeve (36).

6. Arrangement according to claim 5, **characterised by** the fact that the sleeve (36) is formed by being moulded over the lead (33) for mounting the sensor.

7. Arrangement according to claim 1, **characterised by** the fact that the sealing lip (13) of the first armature (11) bears axially and radially upon a bearing surface (15) of the second armature (14) that is fixed in rotation with the coder (16) upon a bearing surface (41) of the rotating ring (2).

8. Arrangement according to claim 7, **characterised by** the fact that the bearing surface (15) of the second armature (14) is a sealing bearing surface.

9. Arrangement according to any one of claims 1 to 8, **characterised by** the fact that the coder (16) is carried by an element (14a, 14b, 14c) of the second armature (14) in sealing bearing with a shoulder (20) of the rotating ring (2) that axially limits the mounting range of the coder.

10. Arrangement according to any one of claims 1 to 9, **characterised by** the fact that the first armature (11) has an axial cutting (29) submerged in the mass of elastomer material (21).
